(19) Europäisches Patentamt
European Patent Office
Office européen des brevets

(11) EP 4 434 354 A1

(12) EUROPEAN PATENT APPLICATION
published in accordance with Art. 153(4) EPC

(43) Date of publication:
**25.09.2024 Bulletin 2024/39**

(21) Application number: **22895569.6**

(22) Date of filing: **14.11.2022**

(51) International Patent Classification (IPC):
***A23L 27/00*** *(2016.01)* ***A01J 25/00*** *(2006.01)*
***A23B 7/10*** *(2006.01)* ***A23L 11/50*** *(2021.01)*
***A23L 17/00*** *(2016.01)* ***A23L 19/00*** *(2016.01)*
***A23L 19/18*** *(2016.01)* ***A23L 23/00*** *(2016.01)*
***A23L 23/10*** *(2016.01)* ***A23L 27/40*** *(2016.01)*
***A23L 27/50*** *(2016.01)* ***A23L 27/60*** *(2016.01)*
***A23L 29/00*** *(2016.01)* ***A23L 35/00*** *(2016.01)*
***C12G 3/04*** *(2019.01)*

(52) Cooperative Patent Classification (CPC):
**A01J 25/00; A23B 7/10; A23L 11/50; A23L 17/00; A23L 19/00; A23L 19/18; A23L 23/00; A23L 23/10; A23L 27/00; A23L 27/40; A23L 27/50; A23L 27/60; A23L 29/00; A23L 35/00; C12G 3/04**

(86) International application number:
**PCT/JP2022/042225**

(87) International publication number:
**WO 2023/090287 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2021 JP 2021186262**
**17.05.2022 JP 2022080774**
**31.08.2022 JP 2022137775**

(71) Applicant: **Nagase Viita Co., Ltd.**
**Okayama-shi, Okayama 702-8006 (JP)**

(72) Inventors:
- **NISHIDA Yoshihiro**
**Okayama-shi, Okayama 702-8006 (JP)**
- **ITO Michie**
**Okayama-shi, Okayama 702-8006 (JP)**
- **YAMADA Mika**
**Okayama-shi, Okayama 702-8006 (JP)**
- **KAWAI Narumi**
**Okayama-shi, Okayama 702-8006 (JP)**
- **NAGAYOSHI Sayaka**
**Okayama-shi, Okayama 702-8006 (JP)**
- **IKEGAMI Shoji**
**Okayama-shi, Okayama 702-8006 (JP)**
- **SAEKI Mizuki**
**Okayama-shi, Okayama 702-8006 (JP)**

(74) Representative: **Müller-Boré & Partner Patentanwälte PartG mbB**
**Friedenheimer Brücke 21**
**80639 München (DE)**

# (54) COMPOSITION FOR ENHANCING SALTINESS, COMPOSITION FOR ORAL USE, AND METHOD FOR ENHANCING SALTINESS THEREOF

(57) The purpose of the present invention is to provide a novel method for enhancing saltiness of a composition for oral use. Provided is a composition for oral use saltiness of which can be enhanced by using glucosyl naringin.

EP 4 434 354 A1

## Description

[Technical Field]

The present invention relates to a saltiness enhancing composition, and also relates to a composition for oral use, a method of enhancing the saltiness of the composition for oral use, a use for enhancing the saltiness of the composition for oral use, and a use for manufacturing the composition for oral use.

[Background Art]

Sodium chloride (salt) is used in oral compositions such as foods and beverages for the purpose of adding saltiness, improving storage stability, and the like. Excessive intake of sodium chloride is known to increase the risks of hypertension and heart diseases. Therefore, a reduction in salt intake is recommended by the Japanese Society of Hypertension and other organizations. However, oral compositions having saltiness simply reduced are not popular because palatability and a feeling of satisfaction are disadvantageously reduced due to lack of saltiness. Potassium chloride, which is known as an alternative salt, is not also widely used due to the bitter and harsh tastes of potassium. Therefore, there is a need to develop a technology for providing food products presenting sufficient saltiness even when the content of sodium chloride is reduced, i.e., a technology for enhancing saltiness from sodium chloride in a low-salt oral compositions to achieve the same level of saltiness as that of a composition having a high content of sodium chloride.

For example, the Patent Literatures 1 to 3 describe a mixture including a specific amino acid, an emulsion including piperine, and trehalose, respectively, as an active ingredient having an effect for enhancing saltiness from sodium chloride. The Patent Literature 4 describes that a liquid seasoning agent including sodium, a specific catechin preparation or Alpha Glucocyl Rutin, and ethanol in a specific ratio has an enhanced initial taste of saltiness. In contrast, in the Patent Literatures 5 and 6, glucosyl naringin is mentioned, but an impact of it on saltiness is not described. The Patent Literature 7 describes that naringin which is not glycosylated suppresses the saltiness of beverages.

[CITATION LIST]

[Patent Literature]

Patent Literature 1: Japanese Patent Application Laid-Open No. 2017-135996
Patent Literature 2: Japanese Patent Application Laid-Open No. 2019-150005
Patent Literature 3: Japanese Patent Application Laid-Open No. H10-66540
Patent Literature 4: Japanese Patent Application Laid-Open No. 2008-283877
Patent Literature 5: Japanese Patent Application Laid-Open No. H4-13691
Patent Literature 6: Japanese Patent Application Laid-Open No. 2002-199896
Patent Literature 7: Japanese Patent Application Laid-Open No. 2020-92648

[Summary of Invention]

[Technical Problem]

When an active ingredient showing a conventional saltiness enhancing effect is used at a concentration effective for enhancing saltiness, its own quality of taste may have an impact on the quality of taste of a composition of interest for which saltiness is to be enhanced. This may limit versatility of them. Accordingly, an object of the present invention is to provide a new means of enhancing the saltiness of a composition for oral use.

[Solution to Problem]

As a result of extensive studies to solve the above problem, the present inventors find that glucosyl naringin has a saltiness enhancing effect. Then the present invention has been completed. That is, the present invention provides a saltiness enhancing composition as described below, a composition for oral use, a method of enhancing the saltiness of the composition for oral use, a use for enhancing the saltiness of the composition for oral use, and a use for manufacturing the composition for oral use.

[1] A saltiness enhancing composition comprising glucosyl naringin (GN).

[2] The saltiness enhancing composition according to the above [1], wherein the concentration of the GN is 0.1 ppm to 2000 ppm relative to the total mass of the saltiness enhancing composition.
[3] The saltiness enhancing composition according to the above [1] or [2], wherein the saltiness enhancing composition is for use in preparation of a composition for oral use, and

wherein the mass ratio of the amount of the GN to a salt equivalent amount in the composition for oral use is $0.5\times10^{-7}$ to $0.5\times10^{-1}$, and/or
the salt equivalent amount in the composition for oral use is 0.05 g/100 g or more.

[4] A composition for oral use comprising glucosyl naringin (GN) and salt, wherein the mass ratio of the amount of the GN to a salt equivalent amount in the composition for oral use is $0.5\times10^{-7}$ to $0.5\times10^{-1}$.
[5] The composition for oral use according to the above [4], wherein the concentration of the GN relative to the total mass of the composition for oral use is 2000 ppm or less, and/or the salt equivalent amount in the composition for oral use is 0.05 g/100 g or more.
[6] A composition for oral use comprising glucosyl naringin (GN) and salt, wherein the concentration of the GN relative to the total mass of the composition for oral use is 2000 ppm or less, and a salt equivalent amount in the composition for oral use is 0.05 g/100 g or more.
[7] The composition for oral use according to any one of the above [4] to [6], which is an oral composition or an oral cavity composition.
[8] The composition for oral use according to the above [7], wherein the oral composition is a directly ingestible composition, and the concentration of the GN in the directly ingestible composition is 0.01 ppm to 60 ppm, or
the oral composition is a seasoning composition, and the concentration of the GN in the seasoning composition is 0.1 ppm to 2000 ppm.
[9] A method of enhancing the saltiness of a composition for oral use, the method comprising a step of adding glucosyl naringin (GN) to the composition for oral use.
[10] The method of enhancing saltiness according to the above [9], wherein the GN is added in the step of addition so as to give a concentration of 0.01 ppm to 60 ppm relative to the total mass of the composition for oral use.
[11] Use of glucosyl naringin (GN) for enhancing the saltiness of a composition for oral use.
[12] Use of glucosyl naringin (GN) for manufacturing a composition for oral use, wherein the saltiness of the composition for oral use is enhanced as compared with a composition that do not contain the GN.

[Advantageous Effects of Invention]

According to the present invention, glucosyl naringin can be used to enhance the saltiness of a composition for oral use. In particular, glucosyl naringin can effectively enhance saltiness even at a low concentration where the quality of taste of that glucosyl naringin itself produces a negligible impact. Therefore, the intake of sodium chloride (salt) can be reduced while maintaining a feeling of satisfaction from the saltiness of a composition for oral use and the quality of taste of the composition or oral use. In other words, low salt food products and the like having good flavor can be provided.

[Description of Embodiments]

Hereinafter, the present invention will be described in more detail. It is noted that as used herein "%" and "ppm" both mean a fraction on the basis of mass.

<Glucosyl naringin>

Naringin is a type of polyphenol found in citrus fruits and known as a glycoside of aglycon naringenin. Glucosyl naringin (GN) is a material in which glucose is added to naringin to improve water solubility. Although the GN has been known as bitter-tasting material, the GN is used as an active ingredient of a saltiness enhancing composition in the present invention, as specifically shown in Examples described below. There is no particular limitation for the GN, but examples include monoglucosyl naringin, preferably, 3"-α-monoglucosyl naringin (3"-α-GN) represented by the following formula:

[Formula 1]

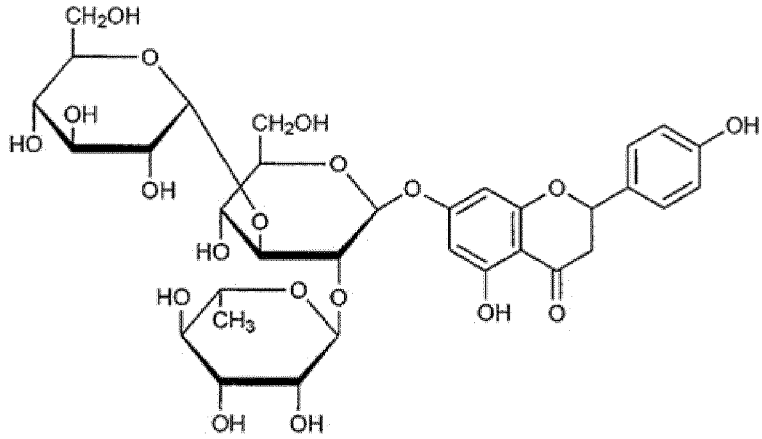

The GN can be appropriately manufactured according to methods commonly used in the art, for example, a method in which an enzyme is used, a method by chemical synthesis, a method in which fermentation is used, or combinations thereof. More specifically, a method in which glycosyltransferase is used is advantageous from an economic standpoint. For example, as described in Patent Literature 5 and 6 and the like, when glycosyltransferase, including α-glucosidase, cyclomaltodextrin glucanotransferase, and α-amylase, acts on naringin in the presence of an α-glucosyl sugar compound such as partial starch hydrolysates and maltooligosaccharides, a series of 3"-α-glycosyl naringins with the degree of glucose polymerization ranging from 1 to 5 in the transfer site are usually obtained in high yield. By allowing glucoamylase to act on these series of 3"-α-glycosyl naringins, a composition including 3"-α-GN can be prepared. This composition including 3"-α-GN may be also further purified to prepare highly pure 3"-α-GN.

<Salt>

The term "salt" refers to edible salt, and includes sodium chloride (NaCl) as the main component. The aforementioned salt may be used as a seasoning agent which presents saltiness. It is noted that as used herein the term "saltiness" means saltiness from salt unless otherwise stated.

The amount of salt in a composition may be expressed as a salt equivalent amount. The term "salt equivalent amount" as used herein refers to the amount of salt calculated from the content of sodium in a composition. This can be calculated based on the content of sodium quantified by inductively coupled plasma spectroscopy, atomic absorption spectrophotometry, or the like according to the following expression:

$$\text{Salt equivalent amount (g)} = \text{the content of sodium (mg)} \times 2.54/1000$$

For example, when the content of sodium in 100 g of a composition is 100 mg, the salt equivalent amount in the composition can be calculated to be 0.254 g (= 100 × 2.54 / 1000), and may be represented as 0.254g/100g or 0.254%. However, if the formulated amount of salt is known, that formulated amount of salt may be used as a salt equivalent amount, and that concentration may be expressed by "salt concentration (mass%)".

<Saltiness enhancing composition>

A saltiness enhancing composition according to the present invention (also referred to as a saltiness enhancing agent) includes the GN as an active ingredient for saltiness enhancement. The saltiness of a composition for oral use can be enhanced by adding this saltiness enhancing composition to the composition for oral use or by adding this saltiness enhancing composition into the mouth along with the composition for oral use simultaneously or sequentially. There is no particular limitation for saltiness, but it may be, for example, saltiness from sodium chloride and the like. There is no particular limitation for the concentration of the GN as long as the saltiness of a composition to be put into the mouth of a subject of interest can be enhanced, but the concentration relative to the total mass of the saltiness enhancing composition may be, for example, about 0.01 ppm to about 3000 ppm, about 0.1 ppm to about 2000 ppm, more specifically, about 0.5 ppm to about 1000 ppm, about 1.0 ppm to about 200 ppm, or about 1.5 ppm to about 100

ppm, or may be about 0.1 ppm to about 1000 ppm, about 0.1 ppm to about 200 ppm, about 0.1 ppm to about 100 ppm, about 1 ppm to about 50 ppm, about 3 ppm to about 42 ppm, or about 5 ppm to about 30 ppm.

The saltiness enhancing effect of the saltiness enhancing compositions according to the present invention can be appropriately tested by methods commonly used in the art. For example, it may be tested by a sensory evaluation in which panelists who are competent in food sensory evaluation sequentially compare in their mouths the same compositions except for the presence or absence of the GN.

There is no particular limitation for the form of the saltiness enhancing composition according to the present invention, but the form may be, for example, a solid form such as a powder form, a granular form, and a block-shaped form; or a liquid form. The saltiness enhancing composition may be distributed in a concentrated form and diluted at the time of use, or may be distributed in a powder form, dissolved at the time of use, and then used.

In a certain aspect, the saltiness enhancing composition according to the present invention may be used to prepare a composition for oral use. There is no particular limitation for the amount of the saltiness enhancing composition to be used, but the saltiness enhancing composition may be used, for example, so that the mass ratio (G/S) of the amount of the GN to the salt equivalent amount (S) in a composition for oral use is about $0.5\times10^{-7}$ to about $0.5\times10^{-1}$, preferably about $0.4\times10^{-6}$ to about $4.0\times10^{-2}$, about $0.3\times10^{-5}$ to about $3.0\times10^{-3}$, about $0.2\times10^{-4}$ to about $2.6\times10^{-3}$, or about $0.2\times10^{-4}$ to about $1.0\times10^{-3}$. Moreover, there is no particular limitation for the salt equivalent amount in the composition for oral use, but it may be, for example, about 0.05 g/100 g or more, or about 0.05 g/100 g to about 20 g/100 g.

In a certain aspect, the saltiness enhancing composition according to the present invention may further include an unreacted raw material (such as naringin) used for preparing the GN, or another naringenin glycoside as a by-product. Moreover, the saltiness enhancing composition according to the present invention may further include any ingredient commonly used in the art, and may further include another ingredient effective for enhancing saltiness, as long as the purposes of the invention are not compromised. There is no particular limitation for the aforementioned any ingredient, but examples may include food product raw materials, food additives, solvents such as water or organic solvents, emulsifiers, excipients, antioxidants, flavoring ingredients (synthetic flavoring agents, natural flavoring agents, natural essential oils, plant extracts, and the like), or the like.

<Composition for oral use>

The term "composition for oral use" as described herein means a composition having an application where it is required to be placed in the mouth. The term can include, for example, an oral composition to be ingested via the mouth (including a directly ingestible composition, a seasoning composition, and the like) and an oral cavity composition which functions in the oral cavity after placed in the mouth. There is no particular limitation for the oral composition or the oral cavity composition, but examples may include pharmaceutical products, quasi drugs, foods and beverages (compositions for foods and beverages), toothpastes, mouthwashes, and the like.

The composition for oral use according to the present invention contains any concentrations (salt equivalent amounts) of the GN and the salt as long as the composition for oral use according to the present invention contains the GN and the salt so that the mass ratio (G/S) of the amount of the GN to the salt equivalent amount (S) is about $0.5\times10^{-7}$ to about $0.5\times10^{-1}$, and the above mass ratio (G/S) is maintained. Alternatively, the composition for oral use according to the present invention has any value of the mass ratio (G/S) as long as the composition for oral use according to the present invention contains the GN and the salt so that the concentration of the GN is about 2000 ppm or less relative to the total mass of the composition for oral use, and the salt equivalent amount in the composition for oral use is about 0.05 g/100 g or more, and these requirements remain satisfied. The GN has a saltiness enhancing effect, and that effect can be achieved even when the GN is present in a small amount relative to the salt. The mass ratio (G/S) may be preferably about $0.4\times10^{-6}$ to about $4.0\times10^{-2}$, about $0.3\times10^{-5}$ to about $3.0\times10^{-3}$, more specifically may be about $0.2\times10^{-4}$ to about $2.6\times10^{-3}$, about $0.5\times 10^{-4}$ to about $2.0\times10^{-3}$, about $0.5\times10^{-4}$ to about $1.56\times10^{-3}$, about $1.0\times10^{-4}$ to about $2.0\times 10^{-3}$, about $1.0\times10^{-4}$ to about $1.0\times10^{-3}$, or about $4.1\times10^{-4}$ to about $2.0\times10^{-3}$. The mass ratio (G/S) in such a range can effectively enhance saltiness to the extent that the quality of taste of the GN produces a negligible impact.

There is no particular limitation for the concentration of the GN in the composition for oral use as long as the aforementioned requirements of the composition for oral use, but it may be, for example, about 3000 ppm or less, about 2000 ppm or less, about 1000 ppm or less, about 300 ppm or less, about 200 ppm or less, about 100 ppm or less, or about 60 ppm or less, about 42 ppm or less, about 21 ppm or less, about 11 ppm or less relative to the total mass of the composition for oral use, and may be about 0.01 ppm or more, about 0.05 ppm or more, about 0.08 ppm or more, about 0.1 ppm or more, about 1 ppm or more, or about 5 ppm or more. More specifically, for example, when the oral composition is a directly ingestible composition, the concentration of the GN in the directly ingestible composition may be about 0.01 ppm to about 60 ppm, preferably is about 0.05 ppm to about 30 ppm, about 0.08 pm to about 15 ppm, or about 0.1 ppm to about 8 ppm, or is about 1 ppm to about 60 ppm, about 1 ppm to about 42 ppm, about 1 ppm to about 21 ppm, or about 1 ppm to about 11 ppm, or about 5 ppm to about 60 ppm, about 5 ppm to about 42 ppm, about 5 ppm to about 21 ppm, or about 5 ppm to about 11 ppm. When the oral composition is a seasoning composition, the concentration

of the GN in the seasoning composition may be about 0.01 ppm to about 3000 ppm, about 0.1 ppm to about 2000 ppm, and is preferably about 0.5 ppm to about 1000 ppm, about 1.0 ppm to about 200 ppm, or about 1.5 ppm to about 100 ppm. The concentration of the GN in such a range can effectively enhance saltiness as compared with a composition that do not contain the GN, to the extent that the quality of taste of the GN produces a negligible impact.

There is no particular limitation for the salt equivalent amount in the composition for oral use as long as the aforementioned requirements are satisfied, but for example, it may be, about 0.05 g/100 g or more, 0.1 g/100 g or more, 0.25 g/100 g or more, or 0.5 g/100 g or more relative to the total mass of the condition for oral use, and may be about 30 g/100 g or less, 20 g/100 g or less, 10 g/100 g or less, 5 g/100 g or less, or 3 g/100 g or less, relative to the total mass of the composition for oral use.

In a certain aspect, the composition for oral use according to the present invention may further include an unreacted raw material (such as naringin) used for preparing the GN or another naringenin glycoside as a by-product. Moreover, the composition for oral according to the present invention may further include any raw material commonly used in the art, and may further include another ingredient effective for enhancing saltiness, as long as the purposes of the invention are not compromised. There is no particular limitation for the aforementioned any raw material, but examples may include sweetening agents, acidifying agents, bittering agents, seasoning agents, flavoring agents, thickening polysaccharides, emulsifying agents, preservatives, bactericidal or antibacterial agents, pH adjusters, isotonic agents, chelating agents, stabilizers, antioxidants, coloring agents, bulking agents, flow improvers, excipients, binding agents, disintegrants, solvents, softening agents, oils, fillers, foaming agents, defoaming agents, nourishments, palatable substances, taste components, or medicinal substances.

In a certain aspect, the composition for oral use according to the present invention may be an oral composition such as a composition for foods and beverages. The composition for foods and beverages may be a directly ingestible composition, a seasoning composition that is to be added to other food products for use, or a composition that will become ingestible after prepared for use. Moreover, the composition for oral use may further include any food product raw materials, any food additives, and/or the like which are commonly used in the art. There is no particular limitation for the form of the composition for foods and beverages, but it may be, for example, a liquid form, a fluidized form, a gel form, a semi-solid form, a solid form, or the like, or it may a form that will become a liquid form, a fluidized form, a gel form, a semi-solid form, or a solid form after prepared for use. Specifically, the composition for foods and beverages may be, for example, alcoholic beverages such as synthetic alcoholic beverages, brewed alcoholic beverages, sake, fruit wine, low-malt beer, beer, liqueur, shochu highball, and medicinal liquor; beverages such as carbonated beverages, soft drinks, tonic water, milk beverages, smoothies, vegetable juices, fruit juices, sports drinks, vinegar beverages, soy milk beverages, iron-containing beverages, lactic acid bacteria beverages, green tea, black tea, herbal tea, cocoa, coffee, non-alcoholic drinks, and energy drinks; staple diets such as rice, rice porridge, rice cake, and bread; noodles such as Udon noodles, buckwheat noodles, Ramen noodles, and spaghetti; Soup such as miso soup, clear soup, and vegetable soup; dairy products such as yogurt and cheese; meat products such as sausage and ham; fish meat products such as steamed fish paste, fishcake tubes, fish minced and steamed, and fish sausage; processed marine products such as canned sea food and dried fish; pickles such as lightly-pickled vegetables, pickled Japanese radish, Kimchi, pickled plums, and shibazuke pickles; confectionery such as soft candy, hard candy, gummy, jelly, cookie, soft cookie, rice cracker, Gyuhi, rice cake, mousse, Bavarian cream, biscuit, chocolate, chewing gum, caramel, fruit paste, jam, marmalade, serial bar, protein bar, and energy bar; cold confectionery such as ice cream or sherbet and gelato; or various seasoning agents such as soybean paste, powdered soybean paste, soy sauce, powdered soy sauce, mayonnaise, dressing, edible vinegar, noodle soup base, sauce, tomato sauce, pasta sauce, curry block, soup base, Ramen soup, Furikake seasoning, salted kelp, food boiled down in soy source, salted fish guts, salty kouji, and composite condiments such as seasoning and dip; and cooked or semi-cooked processed food products (including frozen foods) such as snack foods, rice crackers, French fries, deep-fried foods, to which these seasoning agents are added; and the like. The aforementioned cooked or semi-cooked processed food products may be food products of the particular applications such as nursing care diet, hospital diet, diet for the sick, therapeutic diet, fluid diet, and the like.

Moreover, in a certain aspect, the composition for oral use according to the present invention may be in a form of a solid seasoning agent having a surface at least a portion of which is coated with a composition containing the GN or in a form of a solid seasoning agent having the GN attached to at least a portion of a surface thereof. Specifically, the composition for oral use according to the present invention may be salt having a surface at least a portion of which is coated with a composition containing the GN or salt having the GN attached to at least a portion of a surface thereof. The solid seasoning agent can be appropriately prepared by a method commonly used in the art. For example, the solid seasoning agent may be prepared by dissolving a composition including the GN in a solvent such as water, and spraying it onto an uncoated solid seasoning agent such as salt, and optionally it may be prepared via an optional step of pulverization and/or granulation after drying so as to obtain a desired form. A solid seasoning agent having a surface at least a portion of which is coated with a composition containing the GN or having the GN attached to at least a portion of a surface thereof can be used for various food products (for example, food products that are dusted with salt, such as potato chips) in place of normal salt, thereby reducing the amount of salt to be ingested from these food products.

<Method of enhancing saltiness of composition for oral use>

A method of enhancing the saltiness of the composition for oral use according to the present invention includes a step of adding the GN to the composition for oral use. The saltiness of the composition for oral use can be enhanced because the GN has a saltiness enhancing effect. In a certain aspect, the composition for oral use includes salt.

There is no particular limitation for the addition amount of the GN as long as a saltiness enhancing effect can be achieved in the composition for oral use, but the GN may be added at the step of addition so as to give a concentration of about 0.01 ppm or more, about 0.05 ppm or more, about 0.08 ppm or more, about 0.1 ppm or more, about 1.0 ppm or more, or about 5.0 ppm or more relative to the total mass of the composition for oral use, or a concentration of about 3000 ppm or less, about 1000 ppm or less, about 300 ppm or less, about 100 ppm or less, about 60 ppm or less, about 48 ppm or less, about 30 ppm or less, about 21 ppm or less, about 15 ppm or less, about 11 ppm or less, or about 8 ppm or less.

The method of enhancing the saltiness of the composition for oral use according to the present invention may further include any step commonly used in the art as long as the purposes of the present invention are not compromised, and may further include a step of adding another ingredient effective for enhancing saltiness.

<Use for enhancing saltiness of composition for oral use>

In a use for enhancing the saltiness of the compositions for oral use according to the present invention, the GN is used. In other words, a saltiness enhancing composition containing the GN is used to enhance the saltiness of the composition for oral use. The aforementioned saltiness enhancing composition is as described above with respect to the saltiness enhancing composition according to an aspect of the present invention.

<Use for manufacturing composition for oral use>

In a use for manufacturing of the composition for oral use according to the present invention, the GN is used, and the saltiness of the composition for oral use will be enhanced as compared to a composition that do not contain the GN. The manufactured composition for oral use is as described above with respect to the composition for oral use according to one aspect of the present invention.

Hereinafter, the present invention will be described specifically with reference to Examples, but the scope of the present invention shall not be limited to these Examples.

[EXAMPLES]

<Experiment 1: Preparation and analysis of 3"-α-monoglucosyl naringin>

Naringin was sequentially treated with enzymes according to the method of preparing a liquid C in Example 1 of Patent Document 6 (Japanese Patent Application Laid-Open No. 2002-199896) to prepare a composition including 3"-α-monoglucosyl naringin (3"-α-GN) (hereinafter also referred to as "enzyme-treated naringin").The content of 3"-α-GN in the resulting composition was measured under the HPLC analysis conditions as shown below, and the content of 3"-α-GN was found to be about 70% with the remainder being unreacted naringin and the like.

- HPLC analysis conditions

Column: "CAPCELL PAK C18 UG120" (from Shiseido Company, Limited)
Eluent: water/acetonitrile/acetic acid = 80/20/0.01(v/v/v)
Detection: UV 280 nm
Temperature: 40°C
Flow rate: 0.8 mL/min

To increase the purity of 3"-α-GN, enzyme-treated naringin was dissolved in a mixture of water/acetonitrile/acetic acid (80/20/0.01 (v/v/v)), which was then subjected to a method similar to the HPLC analysis conditions described above, that is, passed through a C18 column to separate 3"-α-GN from naringin. Fractions of 3"-α-GN were collected using an ultraviolet absorption spectrophotometer as a detector (UV280 nm) Then, the fractions were concentrated under reduced pressure, and powdered by spray drying to obtain powdered highly pure 3"-α-GN. This highly pure 3"-α-GN was subjected to two cycles of washing with pure water and lyophilization to obtain an preparation of 3"-α-GN for use in the following

experiments and preparation examples. The preparation of 3"-α-GN was analyzed by the HPLC method described above and found to be 99.0 mass% pure.

<Experiment 2: Saltiness enhancing effect of 3"-α-GN>

The preparation of 3"-α-GN prepared in Experiment 1, Sunphenon EGCg-OP (from Taiyo Kagaku Co.,Ltd., epigallocatechin gallate (EGCg), 95.3% pure), naringin (from Sichuan Xinhua Health Biotechnology Co., Ltd., 98.2% pure) or Hayashibara Hesperidin S (from Hayashibara Co., Ltd., monoglucosyl hesperidin, 82.1% pure), and salt (from The Salt Industry Center of Japan, the purity of sodium chloride was 99% or higher) were dissolved in pure water to give concentrations as shown in Table 1 below for preparing aqueous solutions of a control sample 1 and test samples 1-1 to 1-5. Then, 9 panelists competent in food sensory evaluation who had passed the five-taste test (hereinafter referred to as "expert panelists") conducted sensory evaluation tests on the test samples. Specifically, each of the expert panelists held a room-temperature control sample and a room-temperature test sample in her/his mouth and evaluated whether the saltiness of the test sample was weaker, similar, or stronger than that of the control sample, and recorded the overall taste. A test sample for which the majority of the expert panelists evaluated as having a stronger saltiness than the control sample was determined as having a saltiness enhancing effect (Good), and a sample for which they did not so was determined as having no saltiness enhancing effect (Bad). Results are shown in Table 1.

[Table 1]

| Table 1: Saltiness enhancing effect of 3"-α-GN | | | | | | | | | |
|---|---|---|---|---|---|---|---|---|---|
| Concentration | Control sample 1 | Test samples | | | | | | | |
| | | 1 | 2 | 3 | 4 | 5 | 6 | 7 | 8 |
| 3"-α-GN (ppm) | - | 0.1 | 1 | 5 | 10 | 40 | - | - | - |
| EGCg (ppm) | - | - | - | - | - | - | 5 | - | - |
| Naringin (ppm) | - | - | - | - | - | - | - | 5 | - |
| Monoglucosyl hesperidin (ppm) | - | - | - | - | - | - | - | - | 4 |
| Salt (mass%) | 0.5 | 0.5 | 0.5 | 0.5 | 0.5 | 0.5 | 0.5 | 0.5 | 0.5 |
| G/S ($\times 10^{-3}$)*1 | - | 0.02 | 0.2 | 1.0 | 2.0 | 8.0 | - | - | - |
| Saltiness enhancing effect | - | Good | Good | Good | Good | *2 | Bad | Bad | Bad |
| *1 The mass ratio (G/S) of the amount (G) of GN to the amount (S) of salt<br>*2 Undetermined whether saltiness was enhanced or not due to strong bitterness. | | | | | | | | | |

The concentration of salt was fixed at 0.5 mass% and the concentration of 3"-α-GN was varied. Enhancement of saltiness was observed as compared to the control sample when the concentration of 3"-α-GN was in a range of 0.1 ppm to 10 ppm (the test samples 1 to 4). While bitterness was also reported at a concentration of 3"-α-GN of 10 ppm, no such findings were reported when the concentration of 3"-α-GN was in a range of 0.1 ppm to 5 ppm (the test samples 1 to 3). This indicated that the saltiness enhancing effect can be achieved at or below that threshold for bitterness. When the concentration of 3" of - α-GN was 40 ppm, whether saltiness was enhanced or not could not be determined due to strong bitterness (the test sample 5). In contrast, the use of EGCg, a type of polyphenol as in the case of 3"-α-GN, or naringin or monoglucosyl hesperidin, a type of polyphenol glycoside, even at a concentration of 5 ppm where a good saltiness enhancing effect was achieved for 3"-α-GN, did not show a saltiness enhancing effect (the test samples 6 to 8). Therefore, the effect of 3"-α-GN in enhancing saltiness at low concentrations without causing bitterness appears to be a unique effect not seen in other polyphenols or polyphenol glycosides.

<Experiment 3: Saltiness enhancing effect of 3"-α-GN in various salt concentrations>

Control samples 2 and 3 and test samples 9 and 10 were prepared as in Experiment 2, except that the concentrations of 3"-α-GN and salt were changed as shown in Table 2 below. Sensory evaluation tests were then conducted as in Experiment 2 to evaluate the intensity of saltiness of the test samples including 3"-α-GN as compared with the control samples of the same salt concentrations. Results are shown in Table 2.

[Table 2]

| Table2: Saltiness enhancing effect of 3"-α-GN | | | | |
|---|---|---|---|---|
| Concentration | Control samples | | Test samples | |
| | 2 | 3 | 9 | 10 |
| 3"-α-GN (ppm) | - | - | 1 | 1 |
| Salt (mass%) | 1 | 2 | 1 | 2 |
| G/S ($\times 10^{-3}$)*1 | - | - | 0.1 | 0.05 |
| Saltiness enhancing effect | - | - | Good | Good |
| *1 The mass ratio (G/S) of the amount of GN (G) to the amount of salt (S). | | | | |

The saltiness enhancing effect of 3"-α-GN was achieved at all salt concentrations tested (the test samples 9 and 10). No bitterness from 3"-α-GN was detected at these instances.

<Experiment 4: Saltiness enhancing effect in steamed fish paste>

Steamed fish paste was prepared in accordance with formulations shown in Table 3 below. Specifically, 1500 g of frozen minced fish (containing 0.3 mass% of salt) was salt-kneaded by adding 60 g of salt, and then mixed with 30 g of granulated sugar, 30 g of egg white, and 30 g of starch previously mixed with 100 g of ice water, to which a predetermined amount of enzyme-treated naringin (the content of 3"-α-GN was 70%) prepared in Experiment 1 was added and mashed in the presence of 650 g of ice. This was filled into a casing tube and heated at 40°C for 60 minutes and then heated at 80°C for 30 minutes, and then water-cooled to prepare steamed fish paste of a control sample 4 and test samples 11 to 14. The resulting steamed fish paste was subjected to the sensory evaluation tests as in Experiment 2. Results are shown in Table 3.

[Table 3]

| Table 3: Saltiness enhancing effect in steamed fish paste | | | | | |
|---|---|---|---|---|---|
| | Control sample 4 | Test samples | | | |
| | | 11 | 12 | 13 | 14 |
| Formulation (g) | | | | | |
| Frozen minced fish | 1500 | 1500 | 1500 | 1500 | 1500 |
| Salt | 60 | 60 | 60 | 60 | 60 |
| Granulated sugar | 30 | 30 | 30 | 30 | 30 |
| Egg white | 30 | 30 | 30 | 30 | 30 |
| Starch | 30 | 30 | 30 | 30 | 30 |
| Enzyme-treated naringin | - | 0.038 | 0.076 | 0.152 | 0.253 |
| Ice (water) | 750 | 749.962 | 749.924 | 749.848 | 749.747 |
| Total | 2400 | 2400 | 2400 | 2400 | 2400 |
| Content | | | | | |
| 3"-α-GN (ppm) | 0 | 11 | 21 | 42 | 70 |
| Salt (mass%) | 2.7 | 2.7 | 2.7 | 2.7 | 2.7 |
| G/S ($\times 10^{-3}$)*1 | - | 0.41 | 0.78 | 1.56 | 2.59 |
| Saltiness enhancing effect | - | Good | Good | Good | *2 |
| *1 The mass ratio (G/S) of the amount of GN (G) to the amount of salt (S).<br>*2 Undetermined whether saltiness was enhanced or not due to strong bitterness. | | | | | |

When 3"-α-GN was added to steamed fish paste, enhanced saltiness was observed as compared with steamed fish paste without it (the test samples 11 to 13). These results revealed that the saltiness enhancing effect of 3"-α-GN

can also be achieved in an actually consumed form of food products. Moreover, in contrast to the results from the test samples 4 and 5 in Experiment 1, no bitterness was detected for the test samples 11, 12, and 13, which included 11 ppm, 22 ppm, or 42 ppm of 3"-α-GN, respectively. The steamed fish paste contained various ingredients other than 3"-α-GN and salt. This appears to have effects for making bitterness less noticeable, resulting in more clearly achieved saltiness enhancing effects. It is noted that, for the test sample 14, whether saltiness was enhanced or not could not be determined due to strong bitterness.

<Experiment 5: Saltiness enhancing effect of salt coated with 3"-α-GN>

The enzyme-treated naringin (the content of 3"-α-GN was 70%) prepared in Experiment 1 was dissolved in pure water to give a concentration of 0.01, 0.1, 1, or 10 mass%, thereby preparing aqueous solutions of enzyme-treated naringin at various concentrations. Aqueous solutions of enzyme-treated naringin were sprayed onto salt (from Nihonkaisui Co., Ltd., the salt equivalent amount was 99.0% or more) in accordance with formulations shown in Table 4 below to prepare test samples 15 to 18 of salt coated with enzyme-treated naringin.

Specifically, aqueous solutions of enzyme-treated naringin with various concentrations which were each contained in a 100 mL spray container was sprayed over 10 g of salt spread thinly on a polypropylene container for five times (total about 0.5 g). This was dried in a dryer at 60°C for 1 hour, and then crushed with a spatula, and further dried in a dryer at 60°C for 1 hour to obtain salt coated with enzyme-treated naringin. Moreover, pure-water sprayed salt prepared by a similar method except that pure water was used instead of an aqueous solution of enzyme-treated naringin was used as a control sample 5.

Visual comparison of the test samples 15 to 18 with the control sample 5 showed that the particles from the former were slightly paler and lighter yellow in color than those from the latter. Form a slightly pale yellow color of the aqueous solutions of enzyme-treated naringin, it can be understood that at least part of the surface of the salt is coated with enzyme-treated naringin or enzyme-treated naringin (particularly 3"-α-GN) is attached to at least a part of the surface of the salt. The resulting samples were subjected to the sensory evaluation tests as in Experiment 2. Results are shown in Table 4.

[Table 4]

| Table 4: Saltiness enhancing effect by coating with enzyme-treated naringin | | | | | |
|---|---|---|---|---|---|
| Formulation | Control sample 5 | Test samples | | | |
| | | 15 | 16 | 17 | 18 |
| Salt (g) | 10 | 10 | 10 | 10 | 10 |
| Pure water (g) | 0.5 | - | - | - | - |
| Enzyme-treated naringin (g)<br>0.01% aqueous solution<br>0.1% aqueous solution<br>1% aqueous solution<br>10% aqueous solution | <br>-<br>-<br>-<br>- | <br>0.5<br>-<br>-<br>- | <br>-<br>0.5<br>-<br>- | <br>-<br>-<br>0.5<br>- | <br>-<br>-<br>-<br>0.5 |
| 3"-α-GN in sample<br>Content (mg)<br>Concentration (ppm) | <br>0<br>0 | <br>0.035<br>3.5 | <br>0.35<br>35 | <br>3.5<br>350 | <br>35<br>3500 |
| G/S ($\times 10^{-3}$)*1 | 0 | 0.0035 | 0.035 | 0.35 | 3.5 |
| Saltiness enhancing effect | - | Good | Good | Good | *2 |
| *1 The mass ratio (G/S) of the amount of GN (G) to the amount of salt (S).<br>*2 Undetermined whether saltiness was enhanced or not due to strong bitterness. | | | | | |

When 3"-α-GN was sprayed onto salt and formulated as a coating, a saltiness enhancing effect was observed as compared with salt that was not sprayed with it (the test samples 15 to 17). These results revealed that the saltiness enhancing effect of 3"-α-GN can be achieved regardless of the formulating means. The mass ratio (G/S) of the amount of GN (G) to the amount of salt (S) in the test samples 15, 16, and 17 was 0.0035, 0.035, or 0.35, respectively, and in particular, the test sample 15 had a significantly lower G/S value than the test samples from Experiments 1 to 3 described above. Nonetheless, as shown in the results of the sensory test results, all of the test samples from Experiment 5,

including the test sample 15, indicated a significantly enhanced top of saltiness without showing bitterness, leading to an excellent saltiness enhancing effect. This suggests that the saltiness enhancing effect of 3"-α-GN in the mouth is more clearly demonstrated when salt is in direct contact with 3"-α-GN, such as in the form wherein at least a part of the surface of salt is coated with 3"-α-GN or wherein 3"-α-GN is attached to at least a part of the surface of salt, or when salt is in relatively close proximity to 3"-α-GN. It is noted that for the test sample 18, whether saltiness was enhanced or not could not be determined due to strong bitterness.

<Experiment 6: Saltiness enhancing effect in potato chips>

Salted potato chips were produced with the test sample 17 prepared in Experiment 5. Specifically, 10 mg of the test sample 17 prepared in Experiment 5 (salt coated with enzyme-treated naringin obtained by spraying 0.5 g of 1 mass% aqueous solution of enzyme-treated naringin on 10 g of salt) was added to a piece (about 1.5 g) of unsalted potato chips (non-salted potato chips, Sokensha Co., Ltd.) to obtain a test sample 19 of salted potato chips. Moreover, salted potato chips prepared by a similar method except that the control sample 5 was used instead of the test sample 17 were used as a control sample 6. The resulting salted potato chips were subjected to the sensory evaluation tests as in Experiment 2. Results are shown in Table 5.

Table 5: Saltiness enhancing effect in potato chips

| Formulation | Control sample 6 | Test sample 19 |
|---|---|---|
| Potato chips (g) | 1.5 | 1.5 |
| Control sample 5 (mg) | 10 | - |
| Test sample 17 (mg) | - | 10 |
| G/S ($\times 10^{-3}$)*1 | 0 | 0.35 |
| Saltiness enhancing effect | - | Good |
| *1 The mass ratio (G/S) of the amount of GN (G) to the amount of salt (S) | | |

Salted potato chips to which salt formulated as a coating by spraying 3"-α-GN was added showed a clear saltiness enhancement as compared with salted potato chips to which salt without sprayed 3"-α-GN was added (a test sample 19). These results revealed that the saltiness enhancing effect of 3"-α-GN can also be achieved in a yet another actually consumed form of food products.

<Preparation Examples>

(1) Low-salt miso soup

To 15.4 g of seasoned miso from the commercially available instant miso soup "25% salt-reduced mixed miso with 4 ingredients" (Topvalu), 1.85 mg (1.3 mg as 3"-α-GN) of enzyme-treated naringin was added to prepare a saltiness enhanced seasoned miso (3"-α-GN concentration: 84.4 ppm, salt equivalent amount: 9.7%). The saltiness enhanced miso was then dissolved in 160 mL of hot water to prepare a miso soup (3"-α-GN concentration: 7.4 ppm, salt equivalent amount: 0.9%). The resulting miso soup had a stronger saltiness and richer flavor than a miso soup prepared without adding enzyme-treated naringin.

(2) Low-salt lightly-pickled vegetables

In 707 g of water, dissolved were 260 g of sorbitol, 5 g of trehalose, 16 g of salt (25% less salt than the normal recipe), 9 g of sodium glutamate, 3 g of citric acid, and 0.01 g of enzyme-treated naringin (7 mg as 3"-α-GN) to prepare a seasoning solution (3"-α-GN concentration: 7 ppm, salt equivalent amount: 1.6%). The seasoning solution was then added to cucumber, which was then sealed and soaked under refrigeration for one day to prepare low-salt cucumber pickles. The resulting lightly-pickled cucumber had moderate saltiness, in spite of a reduced amount of salt.

(3) Powdered soup for instant noodles

Mixed were 300 g of salt (25% less salt than the normal recipe), 100 g of sodium glutamate, 4 g of nucleic acid-based seasoning agent, 100 g of glucose, 200 g of powdered soy sauce (containing 50 g of salt), 3 g of sodium succinate,

30 g of sugar, 10 g of yeast powder, 5 g of pepper, 3 g of ginger powder, 5 g of garlic powder, 1 g of powdered red pepper, 20 g of powdered beef extract, 50 g of powdered pork extract, 30 g of powdered chicken extract, 10 g of powdered shellfish extract, 10 g of lard powder, 5 g of caramel, and 0.06 g of enzyme-treated naringin (42 mg as 3"-α-GN) to prepare a powdered soup base (3"-α-GN concentration: 68 ppm, salt equivalent amount: 39.5%). Then, 7 g of the powdered soup base was dissolved in 500 mL of hot water to prepare a ramen soup (3"-α-GN concentration: 1.0 ppm, salt equivalent amount: 0.5%). The resulting ramen soup had both moderate saltiness and richness, in spite of a reduced amount of salt.

(4) Low-salt dressing

In 220 g of grain vinegar and 460 g of water, 1 g of xanthan gum was mixed and dissolved, and 40 g of white sugar, 19 g of salt (30% less salt than the normal recipe), 2 g of sodium L-glutamate, 5 g of coarsely ground pepper, 2 g of oregano, and 0.001 g of enzyme-treated naringin (0.7 mg as 3"-α-GN) were further mixed. This was pH-adjusted with an appropriate amount of sodium citrate, and then sterilized, to which 250 g of olive oil was added to prepare a dressing (3"-α-GN concentration: 0.7 ppm, salt equivalent amount: 1.9%). The resulting dressing had moderate saltiness, in spite of a reduced amount of salt.

(5) Clear soup prepared with low-salt soy sauce

Enzyme-treated naringin was added to specially selected low-salt soy sauce (Kikkoman Corporation, salt equivalent amount: 8%) to give a concentration of 80 ppm, thereby preparing a saltiness enhanced low-salt soy sauce (3'-α-GN concentration: 56 ppm, salt equivalent amount: 8%). A clear soup (3"-α-GN concentration; 1.8 ppm, salt equivalent amount: 0.3%) was prepared by mixing 5 g of the resulting saltiness enhanced low-salt soy sauce and 150 g of broth. This clear soup had a good flavor with sufficient saltiness in spite of a reduced amount of salt.

(6) Salty dog

In a small amount of water, thoroughly mixed were 60 g of high fructose syrup, 6 g of 5× concentrated grapefruit juice suspension, 3 g of anhydrous citric acid, 0.8 g of trisodium citrate, 1 g of salt, 0.5 mg of enzyme-treated naringin (0.35 mg as 3"-α-GN), and an appropriate amount of a grapefruit flavoring agent, to which 200 mL of vodka (THE NIKKA WHISKY DISTILLING Co., LTD, Wilkinson Vodka 50°) was added. This was diluted with carbonated water to a total volume of 1000 mL to obtain salty dog with an alcohol concentration of 10% (3"-α-GN concentration: 0.4 ppm, salt equivalent amount: 0.1%). The resulting salty dog had firmly saltiness and was a drinkable cocktail.

(7) Cheese

Commercially available low-salt sliced cheese "25% salt-reduced melting sliced cheese" (Topvalu, salt equivalent amount: 0.83%) was heated and melted in a microwave oven. To this, 1% aqueous solution of enzyme-treated naringin was added to give a final concentration of 30 ppm, and stirred well, and then allowed to stand until it hardened, thereby obtaining saltiness enhanced cheese (3"-α-GN concentration: 21 ppm, salt equivalent amount: 0.8%). The resulting cheese had firm saltiness in spite of a reduced amount of salt, and had saltiness and flavor similar to those of cheese without reduced salt.

(8) Furikake seasoning

A 1% aqueous solution of enzyme-treated naringin was sprayed onto 38 g of commercially available low-salt Furikake seasoning "low-salt sesame and salt, 50% off salt, Marumiya Corporation," to give a final concentration of 40 ppm, and then dried to prepare saltiness enhanced Furikake seasoning (3"-α-GN concentration: 28 ppm, salt equivalent amount: 8.5%). The resulting Furikake seasoning had firm saltiness in spite of a reduced amount of salt, and had saltiness and flavor similar to those of Furikake seasoning without reduced salt.

[Industrial applicability]

As described above, glucosyl naringin can be used to enhance the saltiness of a composition for oral use. In particular, glucosyl naringin can effectively enhance saltiness even at a low concentration where the quality of taste of that glucosyl naringin itself produces a negligible impact. Therefore, the intake of sodium chloride (salt) can be reduced while maintaining a feeling of satisfaction from the saltiness of a composition for oral use and the quality of taste of the composition or oral use. In other words, low-salt food products and the like having good flavor can be provided. If low-salt food products having good flavor become widely available, they would be useful in preventing various lifestyle-related diseases such as high blood pressure caused by excessive salt intake, thereby contributing to establishment of healthy lifestyles for people.

## Claims

1. A saltiness enhancing composition comprising glucosyl naringin (GN).

2. The saltiness enhancing composition according to claim 1, wherein the concentration of the GN is 0.1 ppm to 2000 ppm relative to the total mass of the saltiness enhancing composition.

3. The saltiness enhancing composition according to claim 1 or 2, wherein the saltiness enhancing composition is for use in preparation of a composition for oral use, and

   the mass ratio of the amount of the GN to a salt equivalent amount in the composition for oral use is $0.5\times10^{-7}$ to $0.5\times10^{-1}$, and/or
   the salt equivalent amount in the composition for oral use is 0.05 g/100 g or more.

4. A composition for oral use comprising glucosyl naringin (GN), wherein the mass ratio of the amount of the GN to a salt equivalent amount in the composition for oral use is $0.5\times10^{-7}$ to $0.5\times10^{-1}$.

5. The composition for oral use according to claim 4, wherein the concentration of the GN relative to the total mass of the composition for oral use is 2000 ppm or less, and/or the salt equivalent amount in the composition for oral use is 0.05 g/100 g or more.

6. A composition for oral use comprising glucosyl naringin (GN) and salt, wherein the concentration of the GN relative to the total mass of the composition for oral use is 2000 ppm or less, and a salt equivalent amount in the composition for oral use is 0.05 g/100 g or more.

7. The composition for oral use according to any one of claims 4 to 6, which is an oral composition or an oral cavity composition.

8. The composition for oral use according to claim 7, wherein the oral composition is a directly ingestible composition, and the concentration of the GN in the directly ingestible composition is 0.01 ppm to 60 ppm, or
   the oral composition is a seasoning composition, and the concentration of the GN in the seasoning composition is 0.1 ppm to 2000 ppm.

9. A method of enhancing saltiness of a composition for oral use, the method comprising a step of adding glucosyl naringin (GN) to the composition for oral use.

10. The method of enhancing saltiness according to claim 9, wherein the GN is added in the step of addition so as to give a concentration of 0.01 ppm to 60 ppm relative to the total mass of the composition for oral use.

11. Use of glucosyl naringin (GN) for enhancing saltiness of a composition for oral use.

12. Use of glucosyl naringin (GN) for manufacturing a composition for oral use, wherein saltiness of the composition for oral use is enhanced as compared with a composition that do not contain the GN.

## INTERNATIONAL SEARCH REPORT

International application No.
**PCT/JP2022/042225**

**A. CLASSIFICATION OF SUBJECT MATTER**

***A23L 27/00***(2016.01)i; ***A01J 25/00***(2006.01)i; ***A23B 7/10***(2006.01)i; ***A23L 11/50***(2021.01)i; ***A23L 17/00***(2016.01)i; ***A23L 19/00***(2016.01)i; ***A23L 19/18***(2016.01)i; ***A23L 23/00***(2016.01)i; ***A23L 23/10***(2016.01)i; ***A23L 27/40***(2016.01)i; ***A23L 27/50***(2016.01)i; ***A23L 27/60***(2016.01)i; ***A23L 29/00***(2016.01)i; ***A23L 35/00***(2016.01)i; ***C12G 3/04***(2019.01)i

FI: A23L27/00 Z; A23L27/60 A; A23L27/40; A23L29/00; A23L27/50 E; A23L23/00; A23L23/10; C12G3/04; A23L11/50 103; A23L19/00 Z; A23L17/00 101D; A23B7/10 A; A01J25/00; A23L19/18; A23L35/00

According to International Patent Classification (IPC) or to both national classification and IPC

**B. FIELDS SEARCHED**

Minimum documentation searched (classification system followed by classification symbols)

A23L27/00; A01J25/00; A23B7/10; A23L11/50; A23L17/00; A23L19/00; A23L19/18; A23L23/00; A23L23/10; A23L27/40; A23L27/50; A23L27/60; A23L29/00; A23L35/00; C12G3/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY/MEDLINE/EMBASE/BIOSIS/FSTA/AGRICOLA(STN)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2007-325588 A (KAO CORP) 20 December 2007 (2007-12-20)<br>claims, paragraphs [0001]-[0081] | 4-8<br>1-3, 9-12 |
| Y<br>A | JP 4-13691 A (HAYASHIBARA BIOCHEM LAB INC) 17 January 1992 (1992-01-17)<br>claims, p. 4, lower right column, line 1 to p. 5, upper left column, line 16 | 4-8<br>1-3, 9-12 |
| A | JP 2002-199896 A (HAYASHIBARA BIOCHEM LAB INC) 16 July 2002 (2002-07-16) | 1-12 |
| A | JP 2009-82070 A (HAYASHIBARA BIOCHEM LAB INC) 23 April 2009 (2009-04-23) | 1-12 |
| A | LEE, So-Jin, et al. Transglycosylation of Naringin by Bacillus stearothermophilus Maltogenic Amylase To Give Glycosylated Naringin. J. Agric. Food Chem. 1999, vol. 47, no. 9<br>pp. 3669-3674 | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/042225

C. DOCUMENTS CONSIDERED TO BE RELEVANT

| Category* | Citation of document, with indication, where appropriate, of the relevant passages | Relevant to claim No. |
|---|---|---|
| A | HOROWITZ, R. M. and GENTILI, Bruno. Taste and Structure in Phenolic Glycosides. J. Agric. Food Chem. 1969, vol. 17, no. 4 pp. 697-700 | 1-12 |

Form PCT/ISA/210 (second sheet) (January 2015)

## INTERNATIONAL SEARCH REPORT
**Information on patent family members**

International application No.
**PCT/JP2022/042225**

| Patent document cited in search report | Publication date (day/month/year) | Patent family member(s) | Publication date (day/month/year) |
|---|---|---|---|
| JP 2007-325588 A | 20 December 2007 | US 2009/0098268 A1<br>claims, paragraphs [0001]-[0221]<br>WO 2007/055426 A1<br>EP 1949798 A1<br>CN 101309597 A<br>TW 200727794 A<br>KR 10-2008-0066003 A | |
| JP 4-13691 A | 17 January 1992 | EP 455432 A1<br>claims, p. 5, lines 35-56<br>KR 10-1991-0018400 A | |
| JP 2002-199896 A | 16 July 2002 | (Family: none) | |
| JP 2009-82070 A | 23 April 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017135996 A
- JP 2019150005 A
- JP H1066540 A
- JP 2008283877 A
- JP H413691 A
- JP 2002199896 A
- JP 2020092648 A